# EUROPEAN PATENT APPLICATION

(11) **EP 3 542 942 A1**
(43) Date of publication of application: **25.09.2019**
(21) Application number: 18162764.7
(22) Date of filing: 20.03.2018
(51) Int. Cl.: B23K 1/00, B23K 1/008, B23K 3/08

(54) **REFLOW SOLDERING OVEN FOR SOLDERING AN ELECTRONIC CIRCUIT BOARD**

(71) Applicant: Illinois Tool Works, Inc., Glenview, Illinois 60025 (US)
(72) Inventor: DIEPSTRATEN, Gerardus Johannes Adrianus Maria, Glenview, Illinois, 60025 (US)
(74) Representative: Trinks, Ole

(57) **Abstract**

The invention relates to a reflow soldering oven for soldering an electronic circuit board, the oven comprising a heating chamber for applying a temperature profile to the electronic circuit board and a void elimination system for removing voids in a solder, wherein at least one ultrasonic electrode is allocated to the void elimination system for introducing a vibration to at least one area/zone of the reflow soldering oven.

## Description

The present invention relates to a reflow soldering oven, to a soldering module having a reflow soldering oven for soldering components to a circuit board, and to a method for soldering components to a circuit board.

Various methods have been established for the automated soldering of components to circuit boards, also known as printed circuit boards. These include the reflow soldering method and the wave soldering method. A variant of the wave soldering method is the selective soldering method. Both, wave soldering as well as selective soldering, are used for soldering of through hole components. Reflow soldering, however, is used for surface-mounted devices (SMDs).

In a typical wave soldering process, a printed circuit board is moved by a conveyor on an inclined path past a fluxing station, a pre-heating station, and finally a wave soldering station. At the wave soldering station, a wave of solder is caused to well upwardly (by means of a pump) through a wave solder nozzle and contact the circuit board to be soldered. The liquid solder is provided by a tank that is sufficiently heated to liquefy the solder prior to applying it onto the circuit board.

In selective soldering as a variant of wave soldering, the flux is only applied on selected areas of the circuit board while moving the circuit board on the inclined path past the fluxing station. Liquid solder is passed through a soldering nozzle such that a solder wave forms on the top side of the soldering nozzle. As compared to typical wave soldering, the solder wave formed by selective soldering can be smaller and/or arranged in such a way that it only contacts defined spots of the circuit board. Typically, the soldering nozzle is arranged in a solder bath or solder reservoir so that the solder emerging from the soldering nozzle can run off back into the solder bath/solder reservoir. In the solder bath/solder reservoir, the solder can then be reheated and passed through the soldering nozzle by means of a pump.

In contrast thereto, in reflow soldering, a solder paste is applied to the circuit board at a pasting station prior to soldering, e.g. via printing the paste or dispensing it onto the circuit board. Then, components, such as surface-mounted devices (SMDs), are mounted onto the paste-covered circuit board at a mounting station, e.g. via a pick and place machine, before the circuit board is introduced into a reflow soldering oven. Subsequently, the prepared circuit boards are conveyed through the reflow soldering oven, e.g. via a conveyor belt, meanwhile being treated with a specific temperature (reflow) profile. A connection of the components and the circuit board is formed by means of liquid solder resulting from a chemical reaction of the solder paste when being heated.

During such a reflow soldering process, however, gas bubbles or gas pockets can potentially be introduced within the solder itself. These gas bubbles or gas pockets can remain trapped in the solder and form defects, such as voids or cracks, once the solder hardens. Such defects are undesirable in a solder because they act as both electrical and thermal insulators and thereby increase both the electrical impedance and thermal impedance of the solder.

Moreover, in a reflow soldering process, the solder paste is melting to make a connection between material of the printed circuit board and components. In solder paste is approximately 50 % flux that evaporates during the process and when solder is liquid it may become a void (gas encapsulation in solder).

There are various approaches in the market for eliminating voids in solder that, however, are not very successful. A vacuum chamber is most common. This approach, however, requires a divided conveyor in a high temperature environment that results in limited through put. Another approach is the sweep stimulation of the printed circuit board substrate where a mechanic sinusoidal actuation is applied to the printed circuit board that get the voids out of the solder. In this approach, however, the board needs to be hold fixed into the conveyor and there is a potential risk to move components during this process. A further approach requires a pressure change (increase and decrease pressure cycles after another). This approach, however, takes too much time and is not always sufficient.

Against this background, the present invention is based on the problem of specifying a reflow soldering oven, a soldering module having a reflow soldering oven for soldering components to a circuit board, and a method for soldering components to a circuit board, which allow greater consideration to be given to the elimination of voids in solder.

According to the invention, the above problem is solved by a reflow soldering oven as claimed in claim 1, a soldering module as claimed in claim 12, and a soldering method as claimed in claim 13.

Hence, the present invention relates, in particularly, to a reflow soldering oven for soldering an electronic circuit board, wherein the oven comprises a heating chamber for applying a specific temperature profile to the prepared circuit board, and a void elimination system for removing voids in the liquid solder. According to the present invention, at least one ultrasonic electrode is allocated to the void elimination system for introducing a vibration to at least a specific area/zone of the reflow soldering oven.

The subject of the invention is based on the inventors' discovery that the use of controlled vibration during reflow soldering mechanically assists in the separation of voids commonly present in the form of gas bubbles or gas pockets within the liquid solder formed by means of melting the solder paste applied onto the circuit board via heat treatment. In one embodiment, the subject invention relates to a mechanical or electromechanical device integrated into a reflow soldering oven such that it introduces vibrations to a specific peak/cool zone of the reflow soldering oven thereby forming a sound area.

According to some embodiments of the present invention, the void elimination system comprises a vibrating device for introducing vibrations to at least a specific area/zone of the reflow soldering oven where the solder is liquid. The vibrating device may take any form of a mechanical or electromechanical device known in the arts to achieve vibration. Examples of suitable vibrating devices that may be used in accordance with the teachings herein include, but are not limited to, gyroscopes, piezoelectric cells, eccentric-cam devices, and oscillating air diaphragm devices. The vibrating should be robust enough to withstand the temperatures produced in reflow soldering ovens to induce molten solder. Alternatively, the vibrating device may be encased in an insulating material to assist the vibrating in withstanding soldering temperatures.

The vibrating device is preferably configured to form acoustic cavitation in the liquid solder and preferably in the peak/cool zone of the reflow soldering oven where the solder is liquid, resulting in the initiation or enhancement of the dissolving of voids out of the liquid solder thereby achieving void-free solder and solder joints.

The simplest explanation for this is that sound waves propagating through the liquid solder at ultrasonic frequencies do so with a wavelength that is significantly longer than that of the bond length between atoms in the molecule. Therefore, the sound wave cannot affect that vibrational energy of the bond, and can therefore not directly increase the internal energy of a molecule. Instead, the elimination of voids in the liquid solder arises from acoustic vibration: by vibrating the liquid solder, voids are separated from the liquid solder. In liquid solder, voids "swim" around. By introducing acoustic vibration, the voids move and when touch other voids become one bigger void. Any void will disappear when it reaches one edge of the solder. Sound waves stimulate the voids to join with other voids and bring them to the edge where they will disappear.

The vibrating device is designed such that it vibrates as the solder/void combination travels in the heat zone where the solder is molten. Preferably, the vibrating device is capable of adjusting the frequency and amplitude of the vibration as well as withstanding high temperatures.

According to some embodiments disclosed herein, the reflow soldering oven may comprise a control unit for controlling the frequency and/or amplitude at which the at least one ultrasonic electrode of the vibrating device operates. For example, the at least one ultrasonic electrode may be configured to operate at a frequency of approximately 20 kHz to approximately 40 kHz and at an amplitude of approximately 2 to approximately 15 µm, wherein the frequency and/or amplitude is selected depending on at least one parameter of the solder, in particular a temperature of the solder and/or a chemical composition of the solder. In a preferred embodiment the ultrasonic electrode may be configured to operate at a frequency avoiding irritations of operating personnel.

According to a further aspect disclosed herein the void elimination system may further comprise a purge gas system for introducing purge gas into the sound area. The purge gas system is preferably configured to introduce the purge gas in a vibration area of the at least one ultrasonic electrode. Preferably, the purge gas is selected such as to have a surface tension different from the surface tension of the voids to be removed from the liquid solder. In particular, the sound waves might be more affective when combined with a gas that has a different surface tension. Additional purge of a gas in the sound area might be an option to improve performance.

According to a further embodiment disclosed herein, the reflow soldering oven may comprise a gas purification system for purifying gas that contains flux components vaporized from the liquid solder. For example, the gas purification system may comprise at least one gas purification unit that is dedicated to a specific area of the reflow soldering oven. Furthermore, the at least one gas purification unit may comprise at least one catalyst unit comprising a catalyst material to purify the gas that contains the vaporized flux components of the liquid solder. Hereby, the air in the reflow soldering oven can be cleaned efficiently with no or only minimal effect on the performance of the reflow soldering oven.

According to a further aspect disclosed herein the gas purification system may be arranged inside the reflow soldering oven or outside the reflow soldering oven, wherein in the latter the gas purification system is connected to the interior of the reflow soldering oven via a gas duct system. Such an arrangement may be advantageous depending on the specific operation and/or manufacturing parameters.

According to a still further aspect disclosed herein the gas purification system for purifying the gas that contains flux components vaporized from the liquid solder may comprise more than one gas purification unit with same or different catalyst materials dedicated to different areas of the reflow soldering oven. Hereby the cleaning capacity/energy can be adapted to a needed level at a certain zone in the reflow soldering oven, whereby the reflow soldering process is possibly/can be affected in an advantageous manner.

The present invention further relates to a soldering module for the reflow soldering of components to a circuit board, the soldering module having a at least one pasting station for applying solder paste on the circuit board, at least one mounting station for mounting components on the pasted circuit board, at least one conveyor for conveying the circuit board through the soldering module and a reflow soldering oven according to one of the above-described embodiments.

Finally, the present invention relates to a method for soldering components to the circuit board, in particular using a reflow soldering oven according to one of the embodiments described above, wherein to at least a part of liquid solder formed onto the circuit board a vibration is introduced by means of at least one ultrasonic electrode for removing voids in the liquid solder.

## Claims

1. A reflow soldering oven for soldering an electronic circuit board, the oven comprising a heating chamber for applying a temperature profile to the electronic circuit board and a void elimination system for removing voids in a solder, wherein at least one ultrasonic electrode is allocated to the void elimination system for introducing a vibration to at least one area/zone of the reflow soldering oven.

2. The reflow soldering oven according to claim 1,
wherein the at least one area/zone of the reflow soldering oven is a peak/cool zone, and wherein the at least one ultrasonic electrode is configured to introduce sound waves in the at least one peak/cool zone of the reflow soldering oven.

3. The reflow soldering oven according to claims 1 or 2,
wherein the oven comprises a control unit for controlling the frequency and/or amplitude at which the at least one ultrasonic electrode operates.

4. The reflow soldering oven according to one of the claims 1 to 3,
wherein the at least one ultrasonic electrode is configured to operate at a frequency of approximately 20 kHz to approximately 40 kHz and at an amplitude of approximately 2 to approximately 15 µm, wherein the frequency and/or amplitude is selected depending on at least one parameter of the solder, in particular a temperature of the solder and/or a chemical composition of the solder.

5. The reflow soldering oven according to one of the claims 1 to 4,
wherein the void elimination system further comprises a purge gas system for introducing purge gas into the reflow soldering oven.

6. The reflow soldering oven according to claim 5,
wherein the purge gas system is configured to introduce the purge gas in a vibration area of the at least one ultrasonic electrode.

7. The reflow soldering oven according to claim 5 or 6,
wherein the purge gas is selected such as to have a surface tension different from the surface tension of the voids to be removed from the liquid solder.

8. The reflow soldering oven according to one of the claims 1 to 7,
wherein the oven comprises a gas purification system for purifying gas that contains flux components vaporized from the liquid solder.

9. The reflow soldering oven according to claim 8,
wherein the gas purification system comprises a gas purification unit, and wherein the gas purification further comprises a catalyst unit configured to clean the gas by means of a catalyst material without effecting the performance of the oven.

10. The reflow soldering oven according to claim 9,
wherein the gas purification system is configured to be arranged inside or outside the oven, wherein in the latter a connection between the gas purification system and an interior of the oven is provided by a gas duct system.

11. The reflow soldering oven according to claim 10,
wherein the gas purification system comprises more than one gas purification unit with same or different catalyst materials, wherein the more than one purification unit is dedicated to different areas of the reflow soldering oven.

12. A soldering module for reflow soldering of components to a circuit board, the soldering module having a at least one pasting station for applying solder paste on the circuit board, at least one mounting station for mounting components on the pasted circuit board, at least one conveyor for conveying the circuit board through the soldering module, and a reflow soldering oven according to one of the claims 1 to 11.

13. A method for soldering components to the circuit board, in particular using a soldering module according to claim 12 and/or a reflow soldering oven according to one of the claims 1 to 11, wherein to at least a part of the liquid solder formed onto the circuit board a vibration is introduced by means of at least one ultrasonic electrode for removing voids in the liquid solder.
